(19) **Europäisches Patentamt / European Patent Office / Office européen des brevets**

(11) **EP 4 471 728 B1**

(12) **EUROPEAN PATENT SPECIFICATION**

(45) Date of publication and mention
of the grant of the patent:
**15.10.2025 Bulletin 2025/42**

(21) Application number: **24178352.1**

(22) Date of filing: **28.05.2024**

(51) International Patent Classification (IPC):
*G06V 10/26* (2022.01)   *G06V 10/764* (2022.01)
*G06V 10/82* (2022.01)   *G06V 20/17* (2022.01)
*G06V 20/56* (2022.01)   *G06V 20/64* (2022.01)
*G06V 20/70* (2022.01)   *G06V 10/774* (2022.01)
*G06V 10/80* (2022.01)   *G01S 7/48* (2006.01)
*G01S 17/89* (2020.01)

(52) Cooperative Patent Classification (CPC):
G06V 20/64; G01S 7/4802; G01S 17/89;
G06V 10/26; G06V 10/764; G06V 10/774;
G06V 10/803; G06V 10/82; G06V 20/17;
G06V 20/70

(54) **SEMANTIC SEGMENTATION OF AIRBORNE LIDAR DATA BY ARTIFICIAL INTELLIGENCE**

SEMANTISCHE SEGMENTIERUNG VON LIDAR-DATEN AUS DER LUFT DURCH KÜNSTLICHE INTELLIGENZ

SEGMENTATION SÉMANTIQUE DE DONNÉES DE LIDAR AÉROPORTÉ PAR INTELLIGENCE ARTIFICIELLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.05.2023 US 202363504763 P**

(43) Date of publication of application:
**04.12.2024 Bulletin 2024/49**

(73) Proprietor: **Xeos Imaging Inc.**
**Québec QC G1P 4P5 (CA)**

(72) Inventors:
- **NGUYEN, Van Tho**
  **Québec, G1P 4P5 (CA)**
- **ST-PIERRE, Tony**
  **Québec, G1P 4P5 (CA)**
- **CLABAUT, Etienne**
  **Québec, G1P 4P5 (CA)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
- **JANNAT FATEMA-E ET AL: "Extracting Ancient Maya Structures from Aerial LiDAR Data using Deep Learning", SOUTHEASTCON 2023, IEEE, 1 April 2023 (2023-04-01), pages 295 - 302, XP034339398, DOI: 10.1109/ SOUTHEASTCON51012.2023.10115095**
- **PENG KUNYU ET AL: "MASS: Multi-Attentional Semantic Segmentation of LiDAR Data for Dense Top-View Understanding", IEEE TRANSACTIONS ON INTELLIGENT TRANSPORTATION SYSTEMS, IEEE, PISCATAWAY, NJ, USA, vol. 23, no. 9, 1 September 2022 (2022-09-01), pages 15824 - 15840, XP011920012, ISSN: 1524-9050, [retrieved on 20220201], DOI: 10.1109/TITS.2022.3145588**
- **TIMO HACKEL ET AL: "Semantic3D.net: A new Large-scale Point Cloud Classification Benchmark", ARXIV.ORG, CORNELL UNIVERSITY LIBRARY, 201 OLIN LIBRARY CORNELL UNIVERSITY ITHACA, NY 14853, 12 April 2017 (2017-04-12), XP080762629, DOI: 10.5194/ISPRS-ANNALS-IV-1-W1-91-2017**
- **CHARLES R QI: "Pointnet++: deep hierarchical feature learning on point sets in a metric space", ARXIV.ORG, 7 June 2017 (2017-06-07), Ithaca, XP093159349, Retrieved from the Internet <URL:https://arxiv.org/abs/1706.02413> DOI: 10.48550/arXiv.1706.02413**

## Description

### TECHNICAL FIELD

The technical field relates to surveying, and more specifically to systems and methods for segmenting point clouds obtained from airborne LiDAR data.

### BACKGROUND

The semantic segmentation of LiDAR point clouds is a prerequisite for many real-world tasks such as the construction of digital terrain models (DTM), building footprints, and vegetation mapping. The requirement of accuracy for such usage is high. For example, virtually no ground false positive (or at least a low quantity thereof) is allowed to produce a good DTM. Currently known deep learning methods do not meet requirements for commercial usage. The segmentation accuracy is below industry expectations.

Jannat, Fatema-E., et al. "Extracting Ancient Maya Structures from Aerial LiDAR Data using Deep Learning" (SoutheastCon 2023, IEEE, 2023) discloses a deep learning-based classification method for LiDAR data that incorporates augmentation techniques applied exclusively during training. While this method aims to enhance model generalization, it does not achieve the level of segmentation accuracy required for commercial applications. The predefined nature of the transformations leads to inconsistencies when applied to varied real-world data, limiting the model's ability to produce uniform and reliable segmentations. As a result, Jannat 2023 does not adequately address the industry need for improved segmentation accuracy.

Peng, Kunyu, et al. "MASS: Multi-attentional semantic segmentation of LiDAR data for dense top-view understanding" (IEEE Transactions on Intelligent Transportation Systems 23.9 (2022): 15824-15840) describes a multi-attentional semantic segmentation framework for LiDAR data, focusing on dense top-view scene understanding for automated driving. Although the method employs advanced attention-based mechanisms to refine feature extraction, it does not achieve segmentation accuracy that meets industry expectations. The reliance on predefined processing steps and attention mechanisms fails to account for real-world variations in LiDAR data, leading to segmentation artifacts and inconsistencies. This limitation prevents Peng 2022 from providing the level of accuracy necessary for commercial applications where smooth and precise object boundaries are critical.

A need therefore remains for new systems and methods capable of increasing the segmentation quality, in order for instance to generate uniform, smooth segmentations of object surfaces.

## SUMMARY

An approach to increase segmentation quality and obtain a smoother segmentation disclosed herein involves performing "multiple segmentation", i.e., performing more than one class prediction for each point, for instance using data augmentation approaches, and aggregating the multiple predicted classes to obtain a unique class prediction.

According to another aspect, there is provided a system for performing a semantic segmentation of a LiDAR point cloud. The system includes at least one processor; at least one memory; an acquisition module, configured to receive tiles, each representing a sampled area of the LiDAR point cloud, and a predefined range of optimal column sizes for dividing the tiles; an augmentation module, configured to create a plurality of transformed tiles associated with each tile using at least one of: rotating the corresponding tile about an axis by a plurality of random angles, and dividing the corresponding tile using a specific column size randomly chosen from a predefined range of optimal column sizes; a classification module, configured to implement multiple semantic segmentation, the classification module comprising a neural network trained to input one of the plurality of transformed tiles and output a corresponding segmented transformed tile; and an aggregation module, configured to aggregate a plurality of segmented transformed tiles output by the neural network and create a final semantic segmentation result defining a segmented point cloud including a class for each point of the LiDAR point cloud. In some embodiments, the system includes an aerial collection vehicle equipped with an LiDAR transceiver, the LiDAR transceiver comprising at least a transmitter configured to send a laser beam towards an object and a receiver configured to detect a reflection of the laser beam on the object, the optical transceiver configured to create point data based on the reflection of the beam, the point data corresponding to the LiDAR point cloud.

In some embodiments, the system includes a partitioning module, configured to partition the LiDAR point cloud in tiles, each tile representing a sampled area of the LiDAR point cloud.

In some embodiments, the system includes one or more additional aerial collection vehicles, each equipped with an additional LiDAR transceiver, wherein the point data is a combination of the detections of the aerial collection vehicle and of the one or more additional aerial collection vehicles.

In some embodiments, the point data comprise, for each of a plurality of points, at least one of: coordinates, a return number, a number of returns, an intensity and a scan angle.

In some embodiments, the input of the neural network comprises, for each point, at least the scan angle of the point.

In some embodiments, the tiles are provided with an overlap buffer and wherein points of the segmented transformed tiles output corresponding to the overlap buffer are discarded.

In some embodiments, the augmentation module is configured to rotate each of the tiles about a z axis by an angle $\alpha = \frac{2\pi(i-1+r)}{n}$, with $i$ indicating an $i$'th rotation, $r$ a random real number in the range [0; 1] generated for each rotation, and $n$ a predefined number of inferences.

In some embodiments, the system includes a sampling module, configured to sample the plurality of transformed tiles before input in the neural network.

In some embodiments, the neural network is trained to classify points corresponding to different layers of a same object in different classes.

In some embodiments, the neural network is trained to classify points corresponding to a bottom layer of the same object in a first class and to classify other points of the same object in a second class, wherein the second class corresponds to an "unclassified" class.

According to a further aspect, there is provided a method for performing a semantic segmentation of a LiDAR point cloud. The method includes receiving tiles, each representing a sampled area of the LiDAR point cloud, and a predefined range of optimal column sizes for dividing the point cloud tiles; creating a plurality of transformed tiles associated with each tile using at least one of: rotating the corresponding tile about an axis by a plurality of random angles, and dividing the corresponding tile using a specific column size randomly chosen from a predefined range of optimal column sizes performing multiple semantic segmentation by a neural network trained to input one of the plurality of transformed tiles and output a corresponding segmented transformed tile; and aggregating a plurality of segmented transformed tiles output by the neural network to create a final semantic segmentation result defining a segmented point cloud including a class for each point of the LiDAR point cloud.

In some embodiments, the method includes the step of acquiring the point cloud by an aerial collection vehicle equipped with a LiDAR transceiver, the optical transceiver comprising at least a transmitter configured to send a laser beam towards an object and a receiver configured to detect a reflection of the laser beam on the object, the LiDAR optical transceiver configured to create point data based on the reflection of the beam, the point data corresponding to the LiDAR point cloud.

In some embodiments, the method includes the steps of: acquiring additional point data by one or more additional collection vehicles, each equipped with an additional optical transceiver; and combining the point data and the additional point data to form the point cloud.

In some embodiments, the point data comprise, for each of a plurality of points, at least one of: coordinates, a return number, a number of returns, an intensity and a scan angle.

In some embodiments, the input of the neural network comprises, for each point, at least the scan angle of the point.

In some embodiments, rotating the corresponding tile comprises rotating the corresponding tile about a z axis by an angle $\alpha = \frac{2\pi(i-1+r)}{n}$, with $i$ indicating an $i$'th rotation, $r$ a random real number in the range [0; 1) generated for each rotation, and $n$ a predefined number of inferences.

In some embodiments, the tiles are provided with an overlap buffer, comprising the step of discarding points of the segmented transformed tiles output corresponding to the overlap buffer.

In some embodiments, the method includes the step of sampling the plurality of transformed tiles before input in the neural network.

In some embodiments, the neural network is trained to classify points corresponding to different layers of a same object in different classes.

## BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment.

Figure 1 is a schematic of a system for acquiring and segmenting a point cloud, according to one embodiment.
Figure 2 is a flowchart of a method for performing the semantic segmentation of a point cloud, according to one embodiment.
Figure 3 is an example of an overlap buffer being added to a tile in a surveying area.

## DETAILED DESCRIPTION

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practised without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

Moreover, although the embodiments of the system and corresponding parts thereof consist of certain configurations as explained and illustrated herein, not all of these components and configurations are essential and thus should not be taken in their restrictive sense. It is to be understood, as also apparent to a person skilled in the art, that other suitable components and cooperation thereinbetween, as well as other suitable configurations, may be used for the system, as will be briefly explained herein and as can be easily inferred herefrom by a person skilled in the art.

Moreover, although the associated method includes steps as explained and illustrated herein, not all of these steps are essential and thus should not be taken in their restrictive sense. It will be appreciated that the steps of the method described herein may be performed in the described order, or in any suitable order. In an embodiment, steps of the proposed method are implemented as software instructions and algorithms, stored in computer memory and executed by processors. It should be understood that servers and computers are therefore required to implement to proposed system, and to execute the proposed method. In other words, the skilled reader will readily recognize that steps of the method can be performed by programmed computers. In view of the above, some embodiments are also intended to cover program storage devices, e.g., digital data storage media, which are machine or computer readable and encode machine-executable or computer-executable programs of instructions, wherein said instructions perform some or all of the steps of said above-described methods. The embodiments are also intended to cover computers programmed to perform said steps of the above-described methods.

One or more systems described herein may be implemented in computer program(s) executed on processing device(s), each comprising at least one processor, a data storage system (including volatile and/or non-volatile memory and/or storage elements), and optionally at least one input and/or output device. "Processing devices" encompass computers, servers and/or specialized electronic devicess which receive, process and/or transmit data. As an example, "processing devices" can include processing means, such as microcontrollers, microprocessors, and/or CPUs, or be implemented on FPGAs. For example, and without limitation, a processing device may be a programmable logic unit, a mainframe computer, a server, a personal computer, a cloud based program or system, a laptop, a personal data assistant, a cellular telephone, a smartphone, a wearable device, a tablet, a video game console or a portable video game device.

Each program is preferably implemented in a high-level programming and/or scripting language, for instance an imperative e.g., procedural or object-oriented, or a declarative e.g., functional or logic, language, to communicate with a computer system. However, a program can be implemented in assembly or machine language if desired. In any case, the language may be a compiled or an interpreted language. Each such computer program is preferably stored on a storage media or a device readable by a general or special purpose programmable computer for configuring and operating the computer when the storage media or device is read by the computer to perform the procedures described herein. In some embodiments, the system may be embedded within an operating system running on the programmable computer.

Furthermore, the system, processes and methods of the described embodiments are capable of being distributed in a computer program product comprising a computer readable medium that bears computer-usable instructions for one or more processors. The computer-usable instructions may also be in various forms including compiled and non-compiled code.

The processor(s) are used in combination with storage medium, also referred to as "memory" or "storage means". Storage medium can store instructions, algorithms, rules and/or trading data to be processed. Storage medium encompasses volatile or non-volatile/-persistent memory, such as registers, cache, RAM, flash memory, ROM, diskettes, compact disks, tapes, chips, as examples only. The type of memory is of course chosen according to the desired use, whether it should retain instructions, or temporarily store, retain or update data. Steps of the proposed method are implemented as software instructions and algorithms, stored in computer memory and executed by processors.

It should be appreciated by those skilled in the art that any block diagrams herein represent conceptual views of illustrative circuitry embodying the principles disclosed herein. Similarly, it will be appreciated that any flow charts and transmission diagrams, and the like, represent various processes which may be substantially represented in computer readable medium and so executed by a computer or processor, whether or not such computer or processor is explicitly shown.

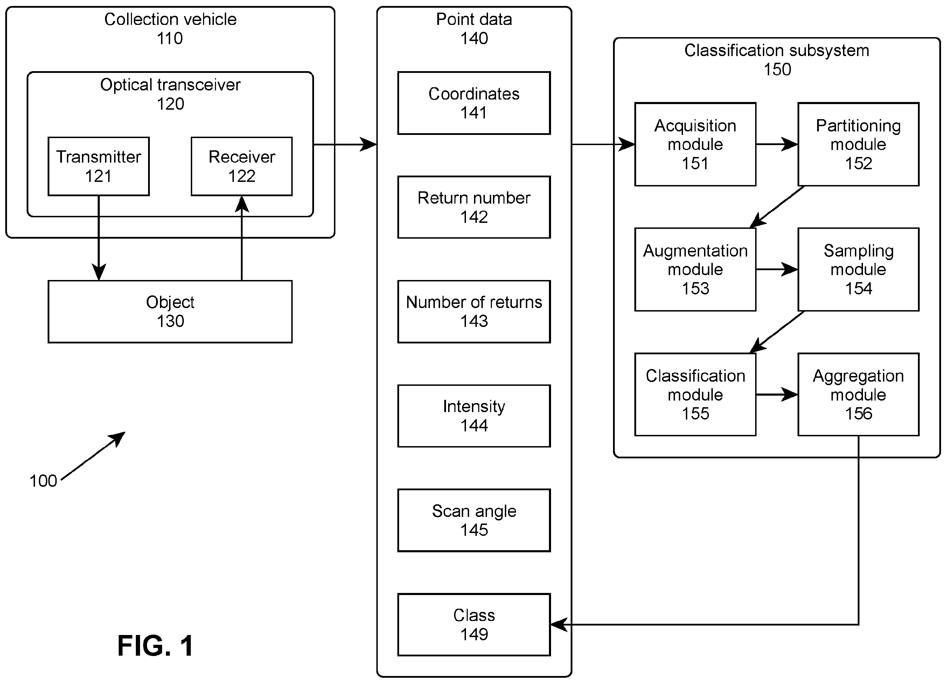

With reference to Figure 1, an exemplary system 100 for acquiring and segmenting a point cloud is shown. Broadly described, the system 100 includes at least one collection vehicle 110 equipped with an optical transceiver 120 used to detect the surface of objects 130. Based on the detection, point data 140 is created. The point data is passed on to a classification subsystem 150, which creates a segmentation.

In exemplary system 100, the surveying can be performed by collection vehicles, i.e. vehicles equipped with sensing equipment. In some embodiments, the collection vehicles are airborne, and can include manned and/or unmanned aerial vehicles, such as airplanes and drones, and/or spatial vehicles, such as satellites. Each collection vehicle can be equipped with one or more sensors, including for instance active optical sensors such as optical transceivers 120. For instance, in airborne collection vehicles, one or more optical transceivers 120 can be mounted on an underside surface of the vehicle, such that it is directed towards the ground. Each optical transceiver 120 can include a transmitter 121, configured to emit an optical beam, e.g., towards objects and/or towards the ground, and a receiver 122, configured to detect the beam emitted by the transmitter 121 after it has been reflected, e.g. by objects and/or by the ground.

Some or all of the optical transceivers correspond to LiDAR (Light Detection And Ranging) systems. A LiDAR system can include a LiDAR transceiver, which emits a laser pulse and detects one or more reflections of the pulse. As an example, a LiDAR transceiver emitting a pulse beam towards a tree can detect a reflection corresponding to foliage and a reflection corresponding to the ground. Each reflection is associated with a height, which can for instance be calculated from the pulse time of flight and the speed of light and/or by triangulation. A LiDAR system can include one or more positioning sensors, such as Global Positoning System (GPS) sensors and/or Inertial Navigation System (INS) sensors.

Whenever a receiver detects a reflection, point data 140 is generated, or acquired. Point data 140 can for instance include tri-dimensional $x$, $y$, $z$ coordinates 141, wherein coordinates $x$ and $y$ can correspond to geographic coordinates indicating the position where the reflection occurred and $z$ can correspond to the altitude at which the reflection occurred. Additional point data 140 can be acquired. As examples, using a LiDAR system, it is possible to acquire a return number 142, indicating that a reflection detection is the $n$'th reflection corresponding to a given laser pulse, a number of returns 143, corresponding to the total number of reflections detected with respect to the laser pulse that created the point, an intensity 144, indicating the return strength of the laser pulse, and a scan angle 145, indicating for instance the angle of the pulse with respect to the nadir of an airborne optical sensor. As an example, the coordinates 142 can correspond to a 3-tuple of integers, the return number 142, number of returns 143 and intensity 144 can correspond to natural numbers, and the scan angle 145 can correspond to an integer. It can be appreciated that additional types of data can be acquired and stored about each point.

To survey an area, one or more collection vehicle 110 may have to perform a plurality of passes over the area, each pass generating data for a large number of points. When data is generated by airborne collection vehicle(s), the subarea surveyed in each pass can be named a flight line. It can be appreciated that the subareas covered by two passes can include overlap, and that point data collected in two passes may appear inconsistent, for instance if the passes were performed at different times or on different dates in changing terrain, including as an example gravel pits or intertidal zones.

The data corresponding to a plurality of points detected during one or more pass by one or more collection vehicle are combined in a point cloud, corresponding to an unstructured collection of point data 140. Point data from multiple sources can for instance be combined by performing a union operation. A point cloud can be stored on persistent storage, for instance using the LAS file format, as defined for instance in the *LAS Specification 1.4 - R15* as revised on 9 July 2019 and published by the American Society for Photogrammetry & Remote Sensing.

The stored point cloud is received by an acquisition module 151 of a classification subsystem 150 to allow for segmentation by a classification module 155 thereof. Segmentation can include semantic segmentation, wherein each point is classified in a given class 149 from a number of possible classes, instance segmentation, wherein objects are identified and delineated in the point cloud, and panoptic segmentation, wherein objects are identified and delineated and points not in objects are classified. The classification module performs semantic segmentation. The classification module 155 can include a trained model taking point data 140 from a point cloud as input and predicting a class 149 for each point as output. As an example only, classes can indicate that a point is predicted to correspond to ground, vegetation (possibly low vegetation, medium vegetation or high vegetation), a building, water, rail, a road surface, a wire, a transmission tower, a wire-structure connector, a bridge deck or an overhead structure. In some embodiment, one or more classes can indicate that a point is deliberately being classified in an "unclassified" class.

In some embodiments, the trained model is produced by training a deep neural network, for instance a convolutional neural network (e.g., ConvPoint, as disclosed in BOULCH, Alexandre; ConvPoint: Continuous convolutions for point cloud processing; Computers & Graphics, 2020, vol. 88, p. 24-34) or Transformer (e.g., PointTransformer, as disclosed in ZHAO, Hengshuang, JIANG, Li, JIA, Jiaya, et al; Point transformer; In : Proceedings of the IEEE/CVF international conference on computer vision; 2021; p. 16259-16268). It is understood that the neural networks can be implemented using computer hardware elements, computer software elements or a combination thereof. Accordingly, the neural networks described herein can be referred to as being computer-implemented. Various computationally intensive tasks of the neural network can be carried out on one or more processors (central processing units and/or graphical processing units) of one or more programmable computers. For example, and without limitation, the programmable computer may be a programmable logic unit, a mainframe computer, server, personal computer, cloud-based program or system, laptop, personal data assistant, cellular telephone, smartphone, wearable device, tablet device, virtual reality device, smart display devices such as a smart TV, set-top box, video game console, or portable video game device, among others.

A neural network model can be trained from existing labelled (i.e., pre-classified) point data. The labelled point data can be split in two or three sets of equal or differing sizes. As an example, 70% of the points can form a training set, 20% of the points can form a validation set, and 10% of the points can form a testing set. During training, point data from the training set is input in the neural network model, which outputs a class prediction. The class prediction is compared to the label through a loss function, such as a cross-entropy loss function or a root mean square error loss function. After one, all, or a configurable amount of points have been classified, the neural network model parameters can be optimized, for instance using a stochastic gradient descent algorithm. The performance of the neural network model can then be evaluated using the validation set. If deficiencies are identified with respect to specific types of point data, e.g., specific type of terrains or specific classes, the training set can be enriched with additional targeted data. (As an example, certain zones may exhibit a lower segmentation performance than others with a given model trained on new data. These zones can be selected to have segmentation errors corrected, so that a new model can be trained using these corrections.) Once the training set has been classified a configurable amount of times, or once an evaluation condition is reached or a configurable amound of time has elapsed, training can be halted and the final neural network model can be evaluated using the test set.

Existing approaches to automatic point cloud semantic segmentation attempt to classify all points corresponding to one object under the same class. In order to make it possible to obtain uniform, smooth and accurate segmentation of object surfaces, the current disclosure proposes classifying points representing a same object in two classes depending on the position of each point relatively to its neighbours. This can be advantageous, for instance, in areas overlapping two or more flight lines, in which differences between points from different flight lines can be observable no matter how accurate the adjustment is, or when the objects have change between two flight lines, e.g., water level in a tidal area, ground level in a sand pit or crop height in a harvest. In some embodiment, layers of an object are automatically identified and the points that are part of the upper layer of the object can be classified in a different class with respect to the points that are part of the bottom layer of the same object, or be classified as "unclassified." To ensure the uniformity of object surfaces, in an embodiment, an automatic process or verification by experts can be applied to the training data.

In some embodiments, the trained model predicts, for each point, a vector of probabilities that it belongs to each possible class. It is thereafter possible to apply a heuristic to attribute a class 149 to each point, such as attributing the most probable class to it. In some embodiments, a softmax layer can be applied so that the output is a stochastic vector. In some embodiments, the class 149 of each point is stored as an additional point datum in the point cloud, for instance using the LAS file format.

It can be appreciated that all or only a subset of the available point data for each point to be classified can be provided as input to the trained model. Existing approaches to point cloud semantic segmentation, such as PointNet, rely mostly or exclusively on tridimensional coordinates 141 and intensity 144. Experimentations have proven that using scan angle 145 in addition to intensity 144 to perform point cloud semantic segmentation can improve the performance of the trained model.

It can be appreciated that areas to be surveyed can be sizeable and correspond to point clouds comprising a large quantity of points and point data. Therefore, it may not be practical to provide entire point clouds as input to the trained model. As will be explained in more details below with respect to method steps 230 and 260, point clouds and their point data are divided (partitioned) into a plurality of tiles of a suitable size by a partitioning module 152 and/or sampled by a sampling module 154. Partitioning and/or sampling makes it possible to achieve good performance of the segmentation on LiDAR data with different points densities, while nonetheless increasing the computational efficiency by using less computational resources such as processor time and memory space. To further improve computational efficiency, tiles are further divided in columns by the partitioning module 152, as will be explained in more details below with respect to method step 250.

To obtain an optimal tradeoff between computational performance and result quality, additional tiles and/or columns are created through augmentation approaches by the augmentation module 153, as will be explained in more details below with respect to method step 240.

Once all points in all partitions, i.e., transformed tiles and/or columns, of a point cloud have been classified, they are aggregated by an aggregation module 156 as will be explained in more details below with respect to method step 280 to create a complete segmentation. This complete segmentation can be used to create different types of useful graphical representations, including for example a digital terrain model, representing the ground surface, and/or a digital elevation or surface model, representing the elevation of terrain or overlaying objects such as building roofs, building footprints, and vegetation canopy.

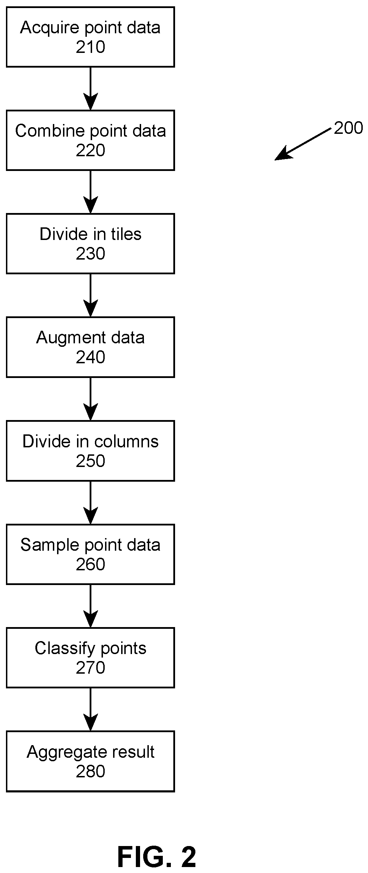

With reference to Figure 2, an exemplary method 200 for performing a semantic segmentation of a point cloud is shown. Broadly described, the method includes acquiring and combining point data and dividing, augmenting and/or sampling it before classifying the points.

A first step 210 includes acquiring point data from one or more sources. As explained in more details above with respect to collection vehicles 110, point data can be created by collection vehicles equipped with optical transceivers making passes over the area to be surveyed. Once created, point clouds including the point data can be saved to persistent storage, for instance using the LAS file format.

A subsequent step 220 when point data has been acquired from more than one source can include combining the point clouds containing the point data. Point clouds are unstructured collections, or sets, of points. This step can include verifying that point data from the different point clouds are compatible. As an example, this can include verifying that the coordinate system used to define the coordinates is the same, and that the $x, y, z$ scale factors and offsets are identical. If this is not the case, coordinates can be recalculated so that point data from various point clouds are compatible. Once compatibility has been ascertained, combing the point clouds can include performing a union operation on the collections of points.

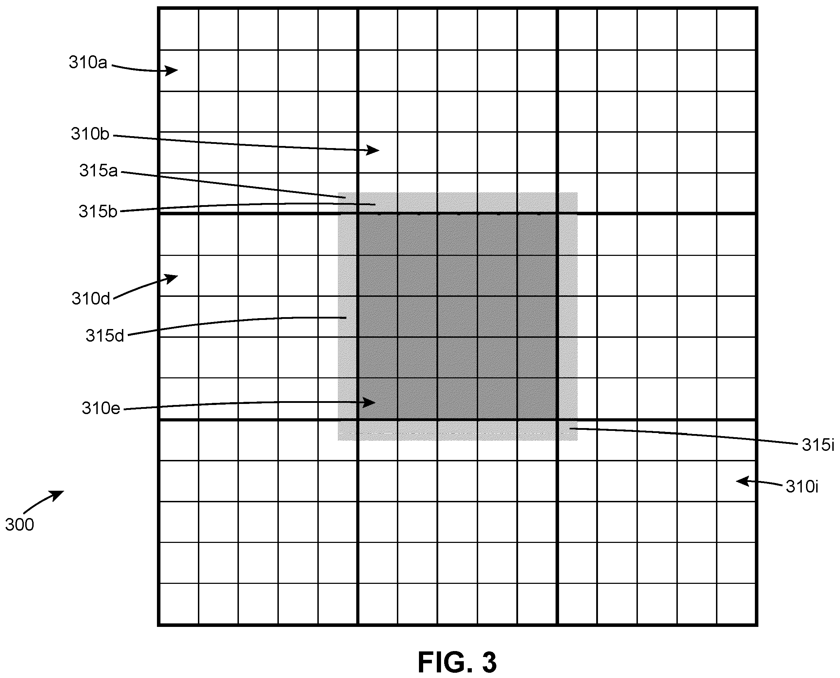

A step 230 is performed to separate the point cloud in a plurality of tiles of a suitable size, e.g., 1 km$^2$. The suitability of a tile size can be dependent on the density of the point cloud, which can for instance be measured in points/m$^2$. In some embodiments, an overlap buffer can be provided to extend a tile and provide more context to assist the segmentation. With reference to Figure 3, as an example only, if an area 300 is divided in nine 1000 × 1000 m tiles 310a-i, the centre tile 310e can be extended to its north-west with the south-easternmost 100 × 100 m subarea 315a of north-west tile 310a, to its north by the southmost 1000 × 100 m subarea 315b of the north tile 310b, to its west by the eaternmost 100 × 1000 m subarea 315d of the west tile 310d, to its south-east with the nort-westernmost 100 × 100 m subarea 315i of south-east tile 310i, etc., creating an overlap buffer 315a-i. The overlap buffer allows for a smooth transition between tiles and improves the consistency of the segmentation of a tile by providing additional context. After the points in a tile and its overlap buffer have been classified, the points in the overlap buffer can be discarded.

With reference again to Figure 2, a step 240 is performed to augment the input data by creating additional, transformed tiles. Each transformed tile can be fed to the trained model, thereby providing multiple inferences yielding a "multiple segmentation", i.e., a plurality of classifications or class probabilities for each point, which can be aggregated at a later point, improving classification accuracy and providing smoother object surfaces. Transformations can include for instance any three-dimensional coordinate transformations, e.g., translation, rigid, similarity, affine and/or projective transforms. As an example, a similarity, or rotation, transform can be applied a number of time to each tiles, e.g., about the $z$ axis by an angle $\alpha = \dfrac{2\pi(i-1+r)}{n}$ radians, with $i$ the $i$'th rotation, $r$ a random real number in the range [0; 1] generated for each transform , and $n$ the number of inferences.

A step 250 is performed to extract from each tile a number of columns of a configurable width. As an example only, if a tile is 1000 × 1000 m, a hundred 100 × 100 m columns can be extracted from it. In these embodiments, the columns are provided as input to the trained model. The optimal size (e.g., width) of the columns is application-specific and depends on the size of objects to be detected. Splitting tiles in columns of an optimal size provides an improvement in both computational performance and accuracy of detection of small objects. Splitting tiles in columns too thin, though, can cause a loss of classification accuracy, since the loss of context make certain classes difficult to distinguish. As an example, a parking and a flat roof may look similar without additional context. In some embodiments, data augmentation can be improved by extracting columns of different widths, each selected randomly in a configurable range of optimal widths, for each transformed tile, yielding an advantageous computational performance-accuracy tradeoff. In some embodiments, a range of optimal column sizes can be defined, and the column size(s) can be randomly chosen from that range.

In some embodiments, a step 260 can be performed to reduce the size of the trained model input by retaining only a sample of the original input. As an example, the number of points input to the trained model can have a maximum limit $M$, e.g., $2^{16}$ and a minimum limit $L$, e.g, 1024. If the number of points $N$ in the column is such that $L \leq N \leq M$, then no sampling needs be performed. If $N < L$, an upsampling can be performed to obtain $L$ points, e.g., by duplicating points in the column. In other cases, points in a column can be sampled. As an example, they can be shuffled and sliced into disjoint slices, each slice containing a sample of exactly $M$ points. If the last slice contains less than $L$ points, missing points can be sampled, e.g., from the previous slice.

In a subsequent step 270, the input point data is provided to the trained model. Depending on the embodiment and the performance of steps 240-260, each input can correspond to a tile, a transformed tile or a column, or to a sample thereof. For each point, the trained model can output a class of the point, or a vector of probabilities corresponding to a plurality of classes.

When multiple inferences are performed on augmented input data, a subsequent step 280 includes aggregating the multiple predictions for each point. Depending on whether the output of the trained model is a class or a vector of probabilities, approaches can include for instance using a majority vote or a mean.

While the above description provides examples of the embodiments, it will be appreciated that some features and/or functions of the described embodiments are susceptible to modification without departing from the scope of the appended claims.

Accordingly, what has been described above has been intended to be illustrative and non-limiting and it will be understood by persons skilled in the art that other variants and modifications may be made without departing from the scope of the invention as defined in the claims appended hereto.

**Claims**

1. A system for performing a semantic segmentation of a LiDAR point cloud, the system comprising:

   at least one processor;
   at least one memory;
   an acquisition module (151), configured to receive a LiDAR point cloud and
   a predefined range of optimal column sizes for dividing a plurality of tiles;
   a partitioning module (152), configured to divide the LiDAR point cloud into a plurality of tiles, each representing a sampled area of the LiDAR point cloud;
   an augmentation module (153), configured to create a plurality of transformed tiles associated with each tile using at least one of:

   rotating the corresponding tile about an axis by a plurality of random angles, and
   dividing the corresponding tile using a specific column size randomly chosen from the predefined range of optimal column sizes;

   a classification module (155), configured to implement multiple semantic segmentation, the classification module comprising a neural network trained to input one of the plurality of transformed tiles and output a corresponding segmented transformed tile; and
   an aggregation module (156), configured to aggregate a plurality of segmented transformed tiles output by the neural network and create a final semantic segmentation result defining a segmented point cloud including a class (149) for each point of the LiDAR point cloud.

2. The system of claim 1, further comprising an aerial collection vehicle (110) equipped with an LiDAR transceiver (120), the LiDAR transceiver comprising at least a transmitter (121) configured to send a laser beam towards an object (130) and a receiver (122) configured to detect a reflection of the laser beam on the object, the optical transceiver configured to create point data (140) based on the reflection of the beam, the point data corresponding to the LiDAR point cloud, optionally further comprising one or more additional aerial collection vehicles, each equipped with an additional LiDAR transceiver, wherein the point data is a combination of the detections of the aerial collection vehicle and of the one or more additional aerial collection vehicles.

3. The system of any of the preceding claims, wherein the point data comprise, for each of a plurality of points, at least one of: coordinates (141), a return number (142), a number of returns (143), an intensity (144) and a scan angle (145), preferably wherein the input of the neural network comprises, for each point, at least the scan angle of the point.

4. The system of any of the preceding claims, wherein the tiles (310) are provided with an overlap buffer (315) and wherein points of the segmented transformed tiles output corresponding to the overlap buffer are discarded.

5. The system of any of the preceding claims, wherein the augmentation module is configured to rotate each of the tiles about a z axis by an angle $\alpha = \frac{2\pi(i-1+r)}{n}$ rad, with $i$ indicating an $i$'th rotation, $r$ a random real number in the range [0; 1] generated for each rotation, and $n$ a predefined number of inferences.

6. The system of any of the preceding claims, comprising a sampling module (154), configured to sample the plurality of transformed tiles before input in the neural network.

7. The system of any of the preceding claims, wherein layers of an object are automatically identified based on differences between points from different overlapping flight lines, wherein the points that are part of the upper layer of the object are classified in a different class with respect to the points that are part of the bottom layer of the same object, and wherein the neural network is trained to classify points corresponding to different layers of a same object in different classes, preferably wherein the neural network is trained to classify points corresponding to a bottom layer of the same object in a first class and to classify other points of the same object in a second class, wherein the second class corresponds to an "unclassified" class.

8. The system of any of the preceding claims, further configured to create a digital terrain map, a building footprint and/or a vegetation map.

9. A method for performing a semantic segmentation of a LiDAR point cloud, the method comprising:

   receiving (210) the LiDAR point cloud and a predefined range of optimal column sizes for dividing a plutality of tiles;
   separating (230) the LiDAR point cloud in the plurality of tiles, each representing a sampled area of the LiDAR point cloud;
   creating a plurality of transformed tiles associated with each tile using at least one of:

   rotating (240) the corresponding tile about an axis by a plurality of random angles, and dividing (250) the corresponding tile using a specific column size randomly chosen from the predefined range of optimal column sizes

performing multiple semantic segmentation (270) by a neural network trained to input one of the plurality of transformed tiles and output a corresponding segmented transformed tile; and aggregating (280) a plurality of segmented transformed tiles output by the neural network to create a final semantic segmentation result defining a segmented point cloud including a class for each point of the LiDAR point cloud.

10. The method of claim 9, comprising the step of acquiring (210) the point cloud by an aerial collection vehicle equipped with a LiDAR transceiver, the optical transceiver comprising at least a transmitter configured to send a laser beam towards an object and a receiver configured to detect a reflection of the laser beam on the object, the LiDAR optical transceiver configured to create point data based on the reflection of the beam, the point data corresponding to the LiDAR point cloud, optionally comprising the steps of:

acquiring additional point data by one or more additional collection vehicles, each equipped with an additional optical transceiver; and combining (220) the point data and the additional point data to form the point cloud.

11. The method of any of the preceding claims, wherein the point data comprise, for each of a plurality of points, at least one of: coordinates, a return number, a number of returns, an intensity and a scan angle, preferably wherein the input of the neural network comprises, for each point, at least the scan angle of the point.

12. The method of any of the preceding claims, wherein rotating the corresponding tile comprises rotating the corresponding tile about a $z$ axis by an angle $\alpha = \frac{2\pi(i-1+r)}{n}$ rad, with $i$ indicating an $i$'th rotation, $r$ a random real number in the range [0; 1) generated for each rotation, and $n$ a predefined number of inferences.

13. The method of any of the preceding claims, wherein the tiles are provided with an overlap buffer, comprising the step of discarding points of the segmented transformed tiles output corresponding to the overlap buffer.

14. The method of any of the preceding claims, comprising the step of sampling (260) the plurality of transformed tiles before input in the neural network.

15. The method of any of the preceding claims, wherein layers of an object are automatically identified based on differences between points from different overlapping flight lines, wherein the points that are part of the upper layer of the object are classified in a different class with respect to the points that are part of the bottom layer of the same object, and wherein the neural network is trained to classify points corresponding to different layers of a same object in different classes.

**Patentansprüche**

1. System zum Durchführen einer semantischen Segmentierung einer LiDAR-Punktwolke, das System umfassend:

mindestens einen Prozessor;
mindestens einen Speicher;
ein Erfassungsmodul (151), das konfiguriert ist, um eine LiDAR-Punktwolke und einen vordefinierten Bereich optimaler Spaltengrößen zum Aufteilen einer Vielzahl von Kacheln zu empfangen;
ein Partitionierungsmodul (152), das konfiguriert ist, um die LiDAR-Punktwolke in eine Vielzahl von Kacheln aufzuteilen, die jeweils einen abgetasteten Bereich der LiDAR-Punktwolke darstellen;
ein Erweiterungsmodul (153), das konfiguriert ist, um eine Vielzahl von transformierten Kacheln zu erstellen, die jeder Kachel zugeordnet sind unter Verwendung von mindestens einem von:

Rotieren der entsprechenden Kachel um eine Achse herum um eine Vielzahl von zufälligen Winkeln und
Aufteilen der entsprechenden Kachel unter Verwendung einer spezifischen Spaltengröße, die aus dem vordefinierten Bereich optimaler Spaltengrößen zufällig ausgewählt wird;
ein Klassifizierungsmodul (155), das konfiguriert ist, um eine mehrfache semantische Segmentierung zu implementieren, das Klassifizierungsmodul umfassend ein neuronales Netzwerk, das darauf trainiert wird, eine von der Vielzahl von transformierten Kacheln einzugeben und eine entsprechende segmentierte transformierte Kachel auszugeben; und
ein Aggregationsmodul (156), das konfiguriert ist, um eine Vielzahl von segmentierten transformierten Kacheln, die durch das neuronale Netzwerk ausgegeben werden, zu aggregieren und ein endgültiges semantisches Segmentierungsergebnis zu erstellen, das eine segmentierte Punktwolke definiert, die eine Klasse (149) für jeden Punkt der LiDAR-Punktwolke einschließt.

2. System nach Anspruch 1, ferner umfassend ein Luftsammelfahrzeug (110), das mit einem LiDAR-Sendeempfänger (120) ausgestattet ist, der LiDAR-Sendeempfänger umfassend mindestens einen Sender (121), der konfiguriert ist, um einen Laserstrahl zu einem Objekt (130) hin zu senden, und einen Empfänger (122), der konfiguriert ist, um eine Reflexion des Laserstrahls auf dem Objekt zu erkennen, wobei der optische Sendeempfänger konfiguriert ist, um Punktdaten (140) basierend auf der Reflexion des Strahls zu erstellen, wobei die Punktdaten der LiDAR-Punktwolke entsprechen, optional ferner umfassend ein oder mehrere zusätzliche Luftsammelfahrzeuge, die jeweils mit einem zusätzlichen LiDAR-Sendeempfänger ausgestattet sind, wobei die Punktdaten eine Kombination der Erkennungen des Luftsammelfahrzeugs und des einen oder der mehreren zusätzlichen Luftsammelfahrzeuge sind.

3. System nach einem der vorstehenden Ansprüche, wobei die Punktdaten, für jeden einer Vielzahl von Punkten, mindestens eines umfassen von:
Koordinaten (141), einer Rückgabezahl (142), einer Anzahl von Rückgaben (143), einer Intensität (144) und einem Scanwinkel (145), vorzugsweise wobei die Eingabe des neuronalen Netzwerks, für jeden Punkt, mindestens den Scanwinkel des Punkts umfasst.

4. System nach einem der vorstehenden Ansprüche, wobei die Kacheln (310) mit einem Überlappungspuffer (315) versehen sind und wobei Punkte der segmentierten transformierten Kachelausgabe, die dem Überlappungspuffer entsprechen, verworfen werden.

5. System nach einem der vorstehenden Ansprüche, wobei das Augmentierungsmodul konfiguriert ist, um jede der Kacheln um eine z-Achse herum um einen Winkel $\alpha = \dfrac{2\pi(i-1+r)}{n}$ rad zu rotieren, wobei *i* eine *i*-te Rotation, *r* eine zufällige reelle Zahl in dem Bereich [0; 1], die für jede Rotation erzeugt wird, und *n* eine vordefinierte Anzahl von Inferenzen anzeigt.

6. System nach einem der vorstehenden Ansprüche, umfassend ein Abtastmodul (154), das konfiguriert ist, um die Vielzahl von transformierten Kacheln vor der Eingabe in das neuronale Netzwerk abzutasten.

7. System nach einem der vorstehenden Ansprüche, wobei Schichten eines Objekts basierend auf Unterschieden zwischen Punkten aus unterschiedlichen, sich überlappenden Fluglinien automatisch identifiziert werden, wobei die Punkte, die Teil der oberen Schicht des Objekts sind, in eine unterschiedliche Klasse als die Punkte klassifiziert werden, die Teil der unteren Schicht desselben Objekts sind, und wobei das neuronale Netzwerk darauf trainiert wird, Punkte, die unterschiedlichen Schichten eines selben Objekts entsprechen, in unterschiedliche Klassen zu klassifizieren, vorzugsweise wobei das neuronale Netzwerk darauf trainiert wird, Punkte, die einer unteren Schicht desselben Objekts entsprechen, in eine erste Klasse zu klassifizieren und andere Punkte desselben Objekts in eine zweite Klasse zu klassifizieren, wobei die zweite Klasse einer "nicht klassifizierten" Klasse entspricht.

8. System nach einem der vorstehenden Ansprüche, das ferner konfiguriert ist, um eine digitale Geländekarte, einen Gebäudegrundriss und/oder eine Vegetationskarte zu erstellen.

9. Verfahren zum Durchführen einer semantischen Segmentierung einer LiDAR-Punktwolke, das Verfahren umfassend:

Empfangen (210) der LiDAR-Punktwolke und eines vordefinierten Bereichs optimaler Spaltengrößen zum Aufteilen einer Vielzahl von Kacheln;
Aufteilen (230) der LiDAR-Punktwolke in die Vielzahl von Kacheln, die jeweils einen abgetasteten Bereich der LiDAR-Punktwolke darstellen;
Erstellen einer Vielzahl von transformierten Kacheln, die jeder Kachel zugeordnet sind, unter Verwendung von mindestens einem von:

Rotieren (240) der entsprechenden Kachel um eine Achse herum um eine Vielzahl von zufälligen Winkeln und
Aufteilen (250) der entsprechenden Kachel unter Verwendung einer spezifischen Spaltengröße, die aus dem vordefinierten Bereich optimaler Spaltengrößen zufällig ausgewählt wird
Durchführen einer mehrfachen semantischen Segmentierung (270) durch ein neuronales Netzwerk, das darauf trainiert wird, eine der Vielzahl von transformierten Kacheln einzugeben und eine entsprechende segmentierte transformierte Kachel auszugeben; und

Aggregieren (280) einer Vielzahl von segmentierten transformierten Kacheln, die durch das neuronale Netzwerk ausgegeben werden, um ein endgültiges semantisches Segmentierungsergebnis zu erstellen, das eine segmentierte Punktwolke definiert, die eine Klasse für jeden Punkt der LiDAR-Punktwolke einschließt.

10. Verfahren nach Anspruch 9, umfassend den Schritt des Erfassens (210) der Punktwolke durch ein Lufterfassungsfahrzeug, das mit einem LiDAR-Sendeempfänger ausgestattet ist, der optische Sendeempfänger umfassend mindestens einen Sender, der konfiguriert ist, um einen Laserstrahl zu einem Objekt hin zu senden, und einen Empfänger, der konfiguriert ist, um eine Reflexion des Laserstrahls auf dem Objekt zu erkennen, wobei der optische LiDAR-Sendeempfänger konfiguriert ist, um Punktdaten basierend auf der Reflexion des Strahls zu erstellen, wobei die Punktdaten der LiDAR-Punktwolke entsprechen, optional umfassend die Schritte:

Erfassen zusätzlicher Punktdaten durch ein oder mehrere zusätzliche Sammelfahrzeuge, die jeweils mit einem zusätzlichen optischen Sendeempfänger ausgestattet sind; und Kombinieren (220) der Punktdaten und der zusätzlichen Punktdaten, um die Punktwolke auszubilden.

11. Verfahren nach einem der vorstehenden Ansprüche, wobei die Punktdaten, für jeden einer Vielzahl von Punkten, mindestens eines umfassen von: Koordinaten, einer Rückgabezahl, einer Anzahl von Rückgaben, einer Intensität und einem Scanwinkel, vorzugsweise wobei die Eingabe des neuronalen Netzwerks, für jeden Punkt, mindestens den Scanwinkel des Punkts umfasst.

12. Verfahren nach einem der vorstehenden Ansprüche, wobei das Rotieren der entsprechenden Kachel das Rotieren der entsprechenden Kachel um eine $z$-Achse herum um einen Winkel $\alpha = \dfrac{2\pi(i-1+r)}{n}$ rad umfasst, wobei das $i$ eine $i$-te Rotation, $r$ eine zufällige reelle Zahl in dem Bereich [0; 1), die für jede Rotation erzeugt wird, und $n$ eine vordefinierte Anzahl von Inferenzen anzeigt.

13. Verfahren nach einem der vorstehenden Ansprüche, wobei die Kacheln mit einem Überlappungspuffer versehen sind, umfassend den Schritt des Verwerfens von Punkten der segmentierten transformierten Kachelausgabe, die dem Überlappungspuffer entsprechen.

14. Verfahren nach einem der vorstehenden Ansprüche, umfassend den Schritt eines Abtastens (260) der Vielzahl von transformierten Kacheln vor der Eingabe in das neuronale Netzwerk.

15. Verfahren nach einem der vorstehenden Ansprüche, wobei Schichten eines Objekts basierend auf Unterschieden zwischen Punkten aus unterschiedlichen, sich überlappenden Fluglinien automatisch identifiziert werden, wobei die Punkte, die Teil der oberen Schicht des Objekts sind, in eine unterschiedliche Klasse als die Punkte klassifiziert werden, die Teil der unteren Schicht desselben Objekts sind, und wobei das neuronale Netzwerk darauf trainiert wird, Punkte, die unterschiedlichen Schichten eines selben Objekts entsprechen, in unterschiedliche Klassen zu klassifizieren.

## Revendications

1. Système pour la réalisation d'une segmentation sémantique d'un nuage de points LiDAR, le système comprenant :

au moins un processeur ;
au moins une mémoire ;
un module d'acquisition (151), configuré pour recevoir un nuage de points LiDAR et une plage prédéfinie de tailles de colonnes optimales pour la division d'une pluralité de tuiles ;
un module de partitionnement (152), configuré pour diviser le nuage de points LiDAR en une pluralité de tuiles, chacune représentant une zone échantillonnée du nuage de points LiDAR ;
un module d'augmentation (153), configuré pour créer une pluralité de tuiles transformées associées à chaque tuile à l'aide d'au moins l'un parmi :

la rotation de la tuile correspondante autour d'un axe selon une pluralité d'angles aléatoires, et
la division de la tuile correspondante à l'aide d'une taille de colonne spécifique choisie de manière aléatoire parmi la plage prédéfinie de tailles de colonnes optimales ;
un module de classification (155), configuré pour mettre en œuvre une segmentation sémantique multiple, le module de classification comprenant un réseau neuronal entraîné à entrer l'une parmi la pluralité de tuiles transformées et à produire une tuile transformée segmentée correspondante ; et
un module d'agrégation (156), configuré pour agréger une pluralité de tuiles transformées segmentées produites par le réseau neuronal et créer un résultat final de segmentation sémantique définissant un nuage de points segmenté comportant une classe (149) pour chaque point du nuage de points LiDAR.

**2.** Système selon la revendication 1, comprenant en outre un véhicule de collecte aérienne (110) équipé d'un émetteur-récepteur LiDAR (120), l'émetteur-récepteur LiDAR comprenant au moins un émetteur (121) configuré pour envoyer un faisceau laser vers un objet (130) et un récepteur (122) configuré pour détecter une réflexion du faisceau laser sur l'objet, l'émetteur-récepteur optique étant configuré pour créer des données de points (140) en fonction de la réflexion du faisceau, des données de points correspondant au nuage de points LiDAR, comprenant en outre éventuellement un ou plusieurs véhicules de collecte aérienne supplémentaires, chacun équipé d'un émetteur-récepteur LiDAR supplémentaire, dans lequel les données de points sont une combinaison des détections du véhicule de collecte aérienne et des un ou plusieurs véhicules de collecte aérienne supplémentaires.

**3.** Système selon l'une quelconque des revendications précédentes, dans lequel les données de points comprennent, pour chacun d'une pluralité de points, au moins l'un parmi : des coordonnées (141), un numéro de retour (142), un nombre de retours (143), une intensité (144) et un angle de balayage (145), de préférence dans lequel l'entrée du réseau neuronal comprend, pour chaque point, au moins l'angle de balayage du point.

**4.** Système selon l'une quelconque des revendications précédentes, dans lequel les tuiles (310) sont dotées d'un tampon de chevauchement (315) et dans lequel des points de la sortie de tuiles transformées segmentées correspondant au tampon de chevauchement sont mises au rebut.

**5.** Système selon l'une quelconque des revendications précédentes, dans lequel le module d'augmentation est configuré pour faire entrer en rotation chacune des tuiles autour d'un axe *z* selon un angle

$$\alpha = \frac{2\pi(i-1+r)}{n}$$ rad, avec *i* indiquant la *i*ème rotation, *r* un nombre réel aléatoire dans la plage [0 ; 1] généré pour chaque rotation, et *n* un nombre prédéfini d'inférences.

**6.** Système selon l'une quelconque des revendications précédentes, comprenant un module d'échantillonnage (154), configuré pour échantillonner la pluralité de tuiles transformées avant l'entrée dans le réseau neuronal.

**7.** Système selon l'une quelconque des revendications précédentes, dans lequel des couches d'un objet sont automatiquement identifiées en fonction de différences entre des points provenant de différentes lignes de vol de chevauchement, dans lequel les points qui font partie de la couche supérieure de l'objet sont classés dans une classe différente par rapport aux points qui font partie de la couche inférieure du même objet, et dans lequel le réseau neuronal est entraîné à classer des points correspondant à différentes couches d'un même objet dans différentes classes, de préférence dans lequel le réseau neuronal est entraîné à classer des points correspondant à une couche inférieure du même objet dans une première classe et à classer d'autres points du même objet dans une seconde classe, dans lequel la seconde classe correspond à une classe « non classée ».

**8.** Système selon l'une quelconque des revendications précédentes, configuré en outre pour créer une carte numérique de terrain, une empreinte de bâtiment et/ou une carte de végétation.

**9.** Procédé pour la réalisation d'une segmentation sémantique d'un nuage de points LiDAR, le procédé comprenant :

la réception (210) du nuage de points LiDAR et d'une plage prédéfinie de tailles de colonnes optimales pour la division d'une pluralité de tuiles ;
la séparation (230) du nuage de points LiDAR en la pluralité de tuiles, chacune représentant une zone échantillonnée du nuage de points LiDAR ;
la création d'une pluralité de tuiles transformées associées à chaque tuile à l'aide d'au moins l'un parmi :

la rotation (240) de la tuile correspondante autour d'un axe selon une pluralité d'angles aléatoires, et
la division (250) de la tuile correspondante à l'aide d'une taille de colonne spécifique choisie de manière aléatoire parmi la plage prédéfinie de tailles de colonnes optimales
la réalisation d'une segmentation sémantique multiple (270) par un réseau neuronal entraîné à entrer l'une parmi la pluralité de tuiles transformées et à produire une tuile transformée segmentée correspondante ; et
l'agrégation (280) d'une pluralité de tuiles transformées segmentées produites par le réseau neuronal pour créer un résultat final de segmentation sémantique définissant un nuage de points segmenté comportant une classe pour chaque point du nuage de points LiDAR.

10. Procédé selon la revendication 9, comprenant l'étape consistant à acquérir (210) le nuage de points par un véhicule de collecte aérienne équipé d'un émetteur-récepteur LiDAR, l'émetteur-récepteur optique comprenant au moins un émetteur configuré pour envoyer un faisceau laser vers un objet et un récepteur configuré pour détecter une réflexion du faisceau laser sur l'objet, l'émetteur-récepteur optique LiDAR étant configuré pour créer des données de points en fonction de la réflexion du faisceau, les données de points correspondant au nuage de points LiDAR, comprenant éventuellement les étapes consistant à :

acquérir des données de points supplémentaires par un ou plusieurs véhicules de collecte supplémentaires, chacun équipé d'un émetteur-récepteur optique supplémentaire ; et combiner (220) les données de points et les données de points supplémentaires pour former le nuage de points.

11. Procédé selon l'une quelconque des revendications précédentes, dans lequel les données de points comprennent, pour chacun d'une pluralité de points, au moins l'un parmi : des coordonnées, un numéro de retour, un nombre de retours, une intensité et un angle de balayage, de préférence dans lequel l'entrée du réseau neuronal comprend, pour chaque point, au moins l'angle de balayage du point.

12. Procédé selon l'une quelconque des revendications précédentes, dans lequel la rotation de la tuile correspondante comprend la rotation de la tuile correspondante autour d'un axe $z$ selon un angle $\alpha = \dfrac{2\pi(i-1+r)}{n}$ rad, avec $i$ indiquant une ième rotation, $r$ un nombre réel aléatoire dans la plage [0 ; 1) généré pour chaque rotation, et $n$ un nombre prédéfini d'inférences.

13. Procédé selon l'une quelconque des revendications précédentes, dans lequel les tuiles sont dotées d'un tampon de chevauchement, comprenant l'étape consistant à mettre au rebut des points de la sortie de tuiles transformées segmentées correspondant au tampon de chevauchement.

14. Procédé selon l'une quelconque des revendications précédentes, comprenant l'étape consistant à échantillonner (260) la pluralité de tuiles transformées avant l'entrée dans le réseau neuronal.

15. Procédé selon l'une quelconque des revendications précédentes, dans lequel des couches d'un objet sont automatiquement identifiées en fonction de différences entre des points provenant de différentes lignes de vol de chevauchement, dans lequel les points qui font partie de la couche supérieure de l'objet sont classés dans une classe différente par rapport aux points qui font partie de la couche inférieure du même objet, et dans lequel le réseau neuronal est entraîné à classer des points correspondant à différentes couches d'un même objet dans différentes classes.

**FIG. 1**

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Extracting Ancient Maya Structures from Aerial LiDAR Data using Deep Learning. **JANNAT, FATEMA-E et al.** SoutheastCon 2023. IEEE, 2023
- **PENG, KUNYU et al.** MASS: Multi-attentional semantic segmentation of LiDAR data for dense top-view understanding. *IEEE Transactions on Intelligent Transportation Systems*, 2022, vol. 23 (9), 15824-15840

- ConvPoint, as disclosed in BOULCH, Alexandre; ConvPoint: Continuous convolutions for point cloud processing. *Computers & Graphics*, 2020, vol. 88, 24-34
- **ZHAO** ; **HENGSHUANG** ; **JIANG** ; **LI** ; **JIA** ; **JIAYA et al.** Point transformer. *Proceedings of the IEEE/CVF international conference on computer vision;*, 2021, 16259-16268